# EUROPEAN PATENT SPECIFICATION

(11) **EP 1 409 246 B1**
(45) Date of publication and mention of the grant of the patent: **10.09.2008**
(21) Application number: 02749775.9
(22) Date of filing: 05.07.2002
(51) Int. Cl.: B32B 27/40, B32B 27/30

(54) **COMPOSITE INTERLAYER FOR LAMINATED GLASS**
VERBUNDZWISCHENSCHICHT FÜR VERBUNDGLAS
INTERCOUCHE COMPOSITE POUR VERRE STRATIFIE

(30) Priority: 11.07.2001 US 304594 P
(43) Date of publication of application: 21.04.2004
(73) Proprietor: Solutia Inc., St. Louis, Missouri 63141 (US)
(72) Inventor: MORAN, James, R., Longmeadow, MA 01106 (US); GERBERICH, Francis, G., Wilbraham, MA 01095 (US)
(74) Representative: Albrecht, Thomas
(86) International application number: PCT/US2002/021119
(87) International publication number: WO 2003/006240

(56) References cited:
- EP-A- 0 373 139
- EP-A- 0 393 007
- US-A- 4 121 014
- US-A- 4 747 896
- US-A- 5 763 089

## Description

The present invention relates to laminated glass and the polymeric layers used therein. More particularly, the present invention relates to multilayer composite interlayers used in laminated glass wherein one of the layers is plasticized polyvinyl butyral (PVB). A key performance attribute of such laminated glass is penetration resistance which is normally determined via the 2.27 kg (5 1b.) ball drop test wherein a Mean Break Height (MBH) can be measured via either the staircase or energy methods. Automotive windshields for use in vehicles in the United States must pass the minimum penetration resistance specification [100% pass at 12 feet (3.7 meters)] found in the ANSI Z26.1 code. In other parts of the world there are similar codes that are required to be met. There are also specific code requirements in both the US and Europe for use of laminated glass in architectural applications wherein minimum penetration resistance must be met.

The staircase method utilizes an impact tower from which the steel ball can be dropped from various heights onto a 30.5 cm x 30.5 cm (12 inches x 12 inches) laminated glass sample. The MBH is defined as the ball drop height at which 50% of the samples would hold the ball and 50% would allow penetration. The test laminate is supported horizonally in a support frame described in the ANSI Z26.1 code. If necessary, an environmental chamber is used to condition laminates to the desired test temperature. The test is performed by positioning the sample in the support frame and dropping a ball onto the laminate sample from a height near the expected MBH. If the ball penetrates the laminate, the result is recorded as a failure and if the ball is supported, the result is recorded as a hold. If the result is a hold, the process is repeated from a drop height 0.5 m higher than the previous test. If the result is a failure, the process is repeated at a drop height 0.5 m lower than the previous test. It is usually necessary to test at least twelve laminates in order to obtain reliable results. This procedure is repeated until all of the test samples have been used. The results are then tabulated and the percent hold at each drop height is calculated. These results are then graphed as percent hold versus height and a line representing the best fit of the data is drawn on the graph. The MBH can then be read from the graph at the point where the percent hold is 50%.

The energy test method determines the MBH by applying the principle of conservation of energy to a ball impacting a laminate. The loss in kinetic energy by the ball after penetrating through a laminate is equal to the amount of energy absorbed by the laminate. The kinetic energy of the ball as it strikes the laminate can be calculated from the drop height. The kinetic energy of the ball after it exits the laminate can be determined by measuring the velocity of the ball using two magnetic field detector coils which are separated by a known fixed distance beneath the laminate. Testing of at least six laminates is usually necessary to obtain reliable results. The measured change in kinetic energy can then be used to calculate the MBH.

In order to achieve acceptable penetration resistance for a glass/PVB/glass laminate, it is essential for the interfacial glass/PVB adhesion levels to be maintained at about 2-7 Pummel units. Acceptable penetration resistance is achieved at a pummel adhesion value of 2 to 7, preferably 4 to 6. At a pummel adhesion value of less than 2, too much glass is lost from the sheet and glass spalling during impact as well as problems with laminate integrity (i.e., delamination) and long term durability can occur. At a pummel adhesion of more than 7, adhesion of the glass to the sheet is generally too high and results in a laminate with poor energy dissipation and low penetration resistance.

Adhesion of PVB to glass is measured using a pummel adhesion test (pummel adhesion value has no units) that is routinely used for quality control purposes in the laminated glass industry. Glass/PVB/glass laminates are prepared, conditioned to -18°C (0°F) and each is manually "pummeled" with a 1 pound (454 g) ball peen hammer to break the glass. All broken glass unadhered to the PVB sheet is removed. The glass left adhered to the sheet is visually compared with a set of standards of known pummel scale, the higher the number, the more glass that remains adhered to the sheet; i.e. at pummel zero no glass is adhered and at pummel 10, 100% of the glass is adhered to the sheet surface.

Another factor in addition to adhesion that is an important consideration for determining penetration resistance is the PVB film thickness in the laminate. Since a large percentage of PVB interlayer used in the production of windshields is heated and then shaped/stretched to achieve a curved color band to conform to the vehicle roof line, a combination of too high adhesion and thin PVB interlayer can cause finished windshields to fail the required penetration resistance performance standard. Because it is not possible to reduce adhesion (and achieve acceptable penetration resistance) after windshields are laminated, windshields must be destroyed if they fail to meet the minimum requirements.

In order to make acceptable interlayer products for use in laminated glass applications, significant efforts are expended to manufacture product with consistent adhesion performance. This is done via tight manufacturing control of resin, plasticizer and other components as well as quality control evaluation of peel adhesion for each lot of interlayers that are produced. PVB interlayers are also manufactured at a controlled level of moisture since interlayer moisture has a large influence on PVB/glass adhesion levels. On the customer's side, there are numerous factors that can affect PVB/glass adhesion including glass source, glass washing, interlayer moisture content, etc. It is extremely important to maintain laminate assembly rooms and PVB blank storage rooms at controlled humidity and temperature to prevent changes in interlayer moisture content. Secondary processing operations such as PVB shaping described in a previous section can result in changes in PVB interlayer moisture content and have accompanying significant effects on PVB/glass adhesion levels and penetration resistance. It is often possible to have very different adhesion behavior on each glass surface or variable/spotty adhesion within a windshield due to glass surface cleanliness that can result in unacceptable penetration resistance and again unacceptable quality. A small percentage of windshield production must be destructively tested to assure that the manufactured product meets the targeted pummel adhesion and required MBH specifications.

Another significant performance deficiency with PVB based laminates is the effect of temperature on penetration resistance. At -18°C (0° F) the observed MBH is about 30-40% of the MBH that is achieved at 23°C (73° F).

It has been known for a long time that with proper selection of the urethane polymer structure (in particular, the soft segment portion) that the sensitivity of the penetration resistance to lower test temperatures for glass/polyurethane/glass laminates can be greatly reduced.

Another significant use of polyurethane (PU) interlayers wherein PVB interlayers do not participate is in the fabrication of specialty laminates involving glass/polycarbonate/glass wherein penetration resistance of the glass laminate is predominately controlled by the polycarbonate component and the PU component acts primarily as an adhesive for the laminate construction. Plasticizers typically used in commercially available PVB interlayers appear to chemically attack the polycarbonate surface resulting in a crazing/haze and unacceptable quality.

Glass/PU/glass laminates typically show excellent resistance of PU/glass adhesion to high humidity and temperature in contrast to PVB based laminates.

U.S. patent 4,121,014 describes a method for overcoming laminate failure in laminated windows containing adjacent layers of polycarbonate and plasticized polyvinyl acetal. The method involves applying a protective adhesive means such as a film of a polyurethane or an epoxy resin to a major surface of at least one of the sheets, assembling the sheets with said film on an interfacial surface of the assembly, and laminating the assembly at high temperature and pressure.

European patent application 0 393 007 A1 describes a transparent polymeric laminate of plasticized polyvinyl butyral sheet chemically linked by urethane groups to a thermoset polyurethane layer formed as the reaction product of a cross-linkable mixture containing diisocyanate and polyether polyol containing primary or secondary hydroxyl groups and having a molecular weight between about 250 to about 8000.

European patent application 0 373 139 A1 describes a polymeric laminate for use with a glass layer in a laminated bilayer or anti-lacerative shield application comprising a first layer of moisture tolerant plasticized polyvinyl butyral containing a) adhesion control agent(s) and b) residual hydroxyl content with optimize glass adhesion and optical performance over a range of moisture contents in the first layer likely to be encountered in use, i.e. 0.2 to 0.5 weight % and 2 to 2.8 weight %, such first layer being in face to face contact with a second layer of a clear polymer film or coating having a combination of performance properties desirable for these applications. Preferred second layers are biaxially stretched polyester and thermoset aliphatic polyurethane.

U.S. patent 4,747,896 describes a protective superposed layer composite glass structure including at least one glass plate, a polyurethane film, and a polyvinyl butyral sheet between the glass plate and the polyurethane film for attaching the polyurethane sheet to the glass plate. A polycarbonate plate is superposed against the polyurethane film. Alternatively, a polyester sheet can be superposed against the polyurethane film.

U.S. patent 4,073,986 describes a laminated glass-plastic glazing unit suitable for aircraft. The unit comprises a pair of sheets of rigid transparent material such as glass or different sizes and an integral interlayer of thermoplastic material having a higher coefficient of thermal expansion than the sheets of rigid transparent material. The interlayer is preponderantly plasticized polyvinyl butyral and integral therewith between at least one of said rigid sheets and said interlayer is a thin layer of polyurethane to reduce the tendency of the interlayer to pull chips from one or both of the rigid sheets when the unit is exposed to extremely low temperatures while in flight in high-flying aircraft. A continuous polyurethane layer may be provided between each rigid sheet and the polyvinyl butyral interlayer or may be provided between only the rigid sheet more likely to be damaged and the polyvinyl butyral in combination with parting material interposed between the other rigid sheet less likely to be damaged and the polyvinyl butyral at or adjacent the marginal portion where the polyvinyl butyral and the other rigid sheet are integral with one another.

In spite of the benefits displayed by polyurethane based laminates, such laminates have not replaced PVB based laminates because of the higher cost of polyurethane polymer. Accordingly, there exists a need in the art for an interlayer that can be used in laminated glass which minimizes the effects of temperature and adhesion on observed penetration resistance with the lower cost and other properties associated with PVB based laminates. The present invention provides a composite interlayer that incorporates many of these benefits.

### SUMMARY OF THE INVENTION

The present invention provides a glass laminate comprising a first layer comprising a plasticized polyvinyl butyral and having a top surface and a bottom surface; a first polyurethane layer adjacent said top surface of said first layer; a second polyurethane layer adjacent said bottom surface of said first layer; a first glass layer adjacent said second polyurethane layer; and a second glass layer adjacent said first polyurethane layer; wherein one of said first polyurethane layer and said second polyurethane layer has a thickness of less than 0.125 millimeters (5 mils). Both the first and second polyurethane layers are initially formed from unplasticized polyurethane less than 0.125 mm (.005 inches) thick in one preferred embodiment but became plasticized by plasticizer migration from the PVB. In another preferred embodiment, plasticized polyurethane is used to form the second and third layers.

### DETAILED DESCRIPTION OF THE PREFERRED EMBODIMENTS

In a preferred embodiment, two thin layers [0.0125 - 0.125 mm (.0005 to .005 inches)] of polyurethane are sandwiched around a core layer of plasticized polyvinyl butyral. The laminates of the present invention have some performance characteristics similar to monolithic polyurethane but at a lower cost. Improvements vs. standard glass/PVB/glass laminates include high penetration resistance at high adhesion and much less sensitivity of penetration resistance to test temperature.

In the present invention, at least one of the polyurethane layers is less than 0.125 mm (.005 inches) thick. The preferred range is 0.025 - 0.10 mm (.001 - .004 inches). The PVB layer is generally less than about 1.52 mm (.060 inches) thick and preferably in the range of .38-.76 mm (.015 - 030 inches). In the preferred embodiment, the PVB layer is 0.56 - 0.70 mm (.022 - .028 inches) thick and is sandwiched between two layers of polyurethane.

The invention is not limited to embodiments wherein a single layer of PVB is sandwiched between two layers of polyurethane. In other embodiments additional functional layers such as polyethylene terephthalate film (PET) or PET film coated with IR reflecting layers or structural plastic sheets, such as polycarbonate sheets, can be utilized in conjunction with the PVB and polyurethane layers. For example, a multilayer composite within the scope of this invention may sequentially comprise a layer of polyurethane, a layer of PVB, a layer of polyurethane, a layer of polycarbonate, and a layer of polyurethane. Another embodiment may comprise a layer of polyurethane, a layer of PVB, a layer of PET, and a layer of polyurethane.

Other combinations and other plastic materials as known to those in the art also are usable herein.

The thin layers of polyurethane used in the present invention are preferably based upon an aliphatic based polyurethane, including aliphatic isocyanate-polyether (or polyester) urethane, and preferably include a UV stabilizer and an antioxidant in order to achieve the required stability when exposed to heat and UV light. In addition, the polyurethane layers preferably should be formulated to obtain high adhesion to glass by the incorporation of silane coupling agents or other suitable chemistries. Such techniques are well known to those of skill in the art. Suitable techniques are disclosed in U.S. Patent No. 3,965,057.

PVB resin typically is produced by known aqueous or solvent acetalization processes reacting polyvinyl alcohol polymer (PVOH) with butyraldehyde in the presence of acid catalyst, followed by neutralization of the catalyst, separation, stabilization and drying of the resin. It is commercially available from Solutia Inc. as Butvar® resin. PVB resin typically has a weight average molecular weight greater than 70,000, preferably about 100,000 to 250,000, as measured by size exclusion chromatography using low angle laser light scattering. On a weight basis, PVB typically comprises less than 22%, preferably about 17 to 19% hydroxyl groups calculated as polyvinyl alcohol (PVOH); up to 10%, preferably 0 to 3% residual ester groups, calculated as polyvinyl ester, e.g. acetate, with the balance being acetal, preferably butyraldehyde acetal, but optionally including a minor amount of acetal groups other than butyral, for example 2-ethyl hexanal.

The PVB resin of the sheet is typically plasticized initially with about 10 to 70 and more commonly 30 to 45 parts plasticizer per hundred parts of resin (pphr). The final concentration of the plasticizer in the PVB sheet will be lower, depending upon the amount of migration that occurs. The amount of migration that occurs can be controlled by a number of factors which are discussed in greater detail below. Plasticizers commonly employed are esters of a polybasic acid or a polyhydric alcohol. Suitable plasticizers are triethylene glycol di-(2-ethylbutyrate), triethyleneglycol di-(2-ethylhexanoate), tetraethyleneglycol diheptanoate, dihexyl adipate, dioctyl adipate, mixtures of heptyl and nonyl adipates, dibutyl sebacate, polymeric plasticizers such as the oil-modified sebacic alkyds, and mixtures of phosphates and adipates, adipates and alkyl benzyl phthalates and mixed adipates made from C₄ to C₉ alkyl alcohols and cyclo C₄ to C₁₀ alcohols. C₆ to C₈ adipate esters such as dihexyl adipate are preferred plasticizers. A more preferred plasticizer is triethylene glycol di(2-ethylhexanoate). The amount of plasticizer used is a convenient means to modify and control the stiffness of the PVB. A useful surrogate property for stiffness is the glass transition temperature (Tg), which is directly related to the level of plasticizer. The plasticized PVB component used in the polymer composites of this invention will generally have a glass transition temperature, Tg of about 30-45° C after plasticizer equilibration has taken place. The glass transition temperature for the soft segment of the polyurethane polymer component of this invention is typically found to be about -50°C to - 60°C.

As used herein, the glass transition temperature of interlayer materials such as plasticized polyvinyl butyral and polyurethane polymer can be determined by rheometric dynamic analysis, e.g. measuring a peak tan delta which can be the ratio of shear loss modulus (G") to shear storage modulus (G') or, alternatively, the ratio of tensile loss modulus (E") to tensile storage modulus (E'). The values reported for PVB herein were determined by a shear mode analysis using the following procedure. For instance, the thermoplastic polymer material is molded into a sample disc of 25 millimeters (mm) in diameter. The polymeric sample disc is placed between two 25 mm diameter parallel plate test fixtures of a Rheometrics Dynamic Spectrometer II. The polymeric sample disc is tested in shear mode at an oscillation frequency of 1 Hertz as the temperature of the sample is increased from -20 to 70°C at a rate of 2°C/minute. The position of the maximum value of tan delta (damping) plotted as dependent on temperature is used to determine Tg. Experience indicates that the method is reproducible to within +/- 1 °C.

It is important to note that the PU component of the assembled PU/PVB/PU composite in the preferred embodiment contains a certain level of plasticizer that has migrated from the PVB layer. This level is controlled by the migration of the plasticizer from the PVB layer and is dependent upon the partitioning of the plasticizer between the polyurethane and PVB layers. The partition coefficient which can be measured and used to predict the migration of plasticizer and the equilibrium compositions of the layers is affected by the composition of the polyurethane layer, the plasticizer type utilized and the hydroxyl content of the PVB resin used. The interfacial surface topography between the plasticized PVB and PU layers which is primarily controlled by the fabrication method (e.g., coextrusion, extrusion coating, etc.) will influence the rate at which equilibrium is achieved once the layers are combined. However, it will be appreciated that composites can be constructed in which no migration occurs or in which plasticizer migration occurs from the PU layer to the PVB layer.

It is also often useful or desirable to incorporate a UV absorber in the PVB. In addition to plasticizer, and optional UV absorber, PVB sheet may contain other performance-enhancing additives such as pigments or dyes for coloring all or part of the sheet, antioxidants and the like. There generally is no need for addition of adhesion control agents to the PVB sheet component since PVB/glass adhesion generally should not be a consideration for this use. PVB sheet is prepared by mixing combined plasticizer and other additives (e.g. UV-absorber and the like) with PVB resin and forcing the mixture under pressure through a die opening to form a sheet.

The laminates of the present invention can be prepared by conventional methods known to those of skill in the art. In order to achieve smooth interfacial topography and acceptable interfacial optics, the preferred process method for combining the PU and plasticized PVB layers is coextrusion. Through proper selection of the PVB and PU composition to achieve the required compatibility, it is possible that the PU/PVB/PU composite can be reblended at low levels into the core PVB layer for effective material utilization and lower costs without negative impact on laminate quality. Less preferred process methods include extrusion coating followed by two-ply lamination and two-pass extrusion coating. However, with these less preferred methods PU/PVB interfacial surface topography needs to be carefully controlled or else undesirable optical haze can be encountered even if the refractive indices of the PU and PVB component are closely matched.

Roughness of the surface of the sheet is usually produced through a phenomenon known to those skilled in the art as melt fracture and such desired characteristics can be derived by design of the extrudate die opening. Other known techniques for producing a rough surface on one or more sides of an extruding sheet involve specifying or controlling one of the following: polymer molecular weight distribution, water content and temperature of the melt These techniques are disclosed in U.S. Patent Nos. 2,904,844; 2,909,810; 3,994,654; 4,575,540 and European Patent No. 0185,863. Embossing of the sheet downstream of the die can also be used to produce the desired surface roughness. Examples of embossed plastic sheets with regular patterned surfaces which can be used with the present invention are described in U.S. Patent Nos. 5,425,977 and 5,455,103. This surface roughness is needed to facilitate the de-airing of the glass/plasticized PU interface during initial laminate processing and is completely eliminated during subsequent autoclave lamination.

The multilayer polymeric laminates of the present invention are used in laminated glass wherein the laminate is sandwiched between two sheets of glass.

The glass sheets can be any combination of any types of glass, including both clear glass and tinted glass, and including annealed, heat strengthened or tempered glass. The composite laminate of the present invention has the advantage that it can be used in the same manner and laminated employing the same equipment as that employed in forming conventional safety glass laminates; for example, process forming a safety glass laminate containing a single layer plasticized PVB safety film. The typical commercial safety glass lamination process comprises the following steps:
(1) hand assembly of the two pieces of glass and the multilayer polymeric laminate;
(2) passing the assembly through a pressure nip roll at room temperature to expel trapped air;
(3) heating the assembly via IR radiant or convective means for a short period, typically until reaching a glass surface temperature of about 100°C;
(4) passing the hot assembly through a second pair of nip rolls to give the assembly enough temporary adhesion to seal the edge of the laminate and allow further handling and
(5) autoclaving the assembly typically at temperatures between 130 to 150°C and pressures between 1050 to 1275 kN/sq.m for about 30 to 90 minutes.
Other means for use in de-airing and edge sealing of the plastic/glass interfaces (steps 2-4) known in the art and are commercially practiced include vacuum bag and vacuum ring processes in which vacuum is utilized to remove the air.

The present invention provides numerous advantages over prior art interlayers used in glass laminates. These improvements include high penetration resistance at high adhesion and much less sensitivity of penetration resistance to temperature. Additionally, the effect of moisture on adhesion is much less with the present invention.

### EXAMPLES 1-6

A series of samples were tested to illustrate the relationships between adhesion and temperature vs. penetration resistance for various glass laminate. The following results in Table I illustrate the effect of pummel adhesion and interlayer/composite type on penetration resistance at 23°C (73°F) and -18°C (0°F). Examples 2, 3 and 6 are for comparison.

**Table I**

| Ex # | Description | Gauge mm | Pummel | Test Temp | MBH Meters | Test Temp | MBH Meters |
|---|---|---|---|---|---|---|---|
| | | (inch) | | | (ft) | (°C) | (ft) |
| 1 | 0.10 mm PU/0.56 mm PVB/0.10 mm PU | 0.76 | 8.6 | 24°C | 8.5 | -18 | 5.3 |
| | (.004" PU/.022" PVB/ .004" PU) | (.030) | | | (27.8) | | (17.4) |
| 2* | Plasticized PVB sheet | 0.76 | 7.4 | 24°C | 4.7 | -18 | 1.3 |
| | (Saflex® RB41) | (.030) | | | (15.5) | | (4.3) |
| 3* | Plasticized PVB sheet | 0.76 | 3.8 | 24°C | 7.2 | -18 | 2.1 |
| | (Saflex® RC41) | (.030) | | | (23.5) | | (6.9) |
| 4 | 0.33 mm PVB/ 0.10 mm PU/ 033 mm PVB | 0.76 | 7.1 | 24°C | 4.0 | -18 | |
| | (.013" PVB/.004" PU/ .013" PVB) | (.030) | | | (13.1) | | |
| 5 | 0.33 mm PVB/0.10 mm PU/ 0.33 mm PVB | 0.76 | 4.4 | 24°C | 7.7 | -18 | 2.8 |
| | (.013" PVB/ .004" PU/ .013" PVB) | (.030) | | | (25.2) | | (9.2) |
| 6* | PU (AG8451) | 0.76 | 7.6 | 24°C | 5.0 | -18 | 5.2 |
| | | (.030) | | | (16.4) | | (17.1) |

| | | | | | | | |
|---|---|---|---|---|---|---|---|
| * For comparison only. Notes: 1. The AG8451 PU used for Examples 1, 4-6 in Table I above is an aliphatic isocyanate polyether based polyurethane film commercially available from Thermedics Inc. of Woburn, MA for use with laminated glass. It contains functional chemistry to provide for high adhesion to glass. 2. The penetration resistance tests shown in Table I were conducted on 30 cm x 30 cm (12 inches x 12 inches) glass laminates using the 2.27 kg (5 1b.) ball drop test (energy method). 3. The PVB sheet used for Examples 2 and 3 was standard, commercially available Saflex® PVB interlayer made by Solutia Inc. using 3 GEH (triethylene glycol di-2-ethyl hexanoate) plasticizer. Other than the difference in thickness, the PVB sheet used for Examples 1, 4 and 5 was comparable to that used for examples 2 and 3. 4. The various composites described in Examples 1, 4 and 5 were prepared by hand assembly of components. The corresponding glass laminates were fabricated using typical nip roll deair/ autoclave lamination conditions used for glass/PVB/glass laminates. | | | | | | | |

Comparison of test results between example 1 and examples 2 - 3 demonstrated the superior penetration resistance at high glass adhesion levels and at low test temperatures between the claimed inventive example (1) and standard glass/PVB/glass comparative examples 2 and 3.

Examples 4 and 5 showed that the incorporation of polyurethane as a core layer did not significantly affect the expected relationship between PVB/glass adhesion and penetration resistance as compared to std. PVB laminates (examples 2 and 3). Also, the relationship between test temperature and penetration resistance for laminates made from such PVB/PU/PVB multilayers was also similar to that found for single layer PVB laminates (compare example 5 vs. example 3 and example 4 vs. example 2).

Example #6 which was a glass/PU/glass laminate using the same PU as Example #1 showed a low sensitivity of penetration resistance to test temperature but at a significantly lower level than inventive example #1.

### EXAMPLES 7- 10

The examples shown in Table II illustrate the compositional changes (plasticizer migration) that occur in both the PVB and PU components after the layers are combined. The results shown are based upon an empirical model that was developed by separate measurements of plasticizer uptake for the PVB and PU polymers and then calculating a partition coefficient for each polymer- the method of which is explained below. These examples also highlight the changes in properties (glass transition temperature, Tg and refractive index, RI) that are important considerations for the composite. The examples also demonstrate how the use of different thicknesses will result in different composite structures (that is, different equilibrium plasticizer levels for each component) which will affect physical properties (modulus/ stiffness), rheological (e.g., handling characteristics during laminate assembly and flow properties during autoclave lamination) and optical properties (RI mismatch and accompanying effect on haze).

The Partition coefficient (K_{d}) for each type of polyurethane polymer was determined by 24 hour immersion of individual polyurethane and plasticized PVB films in a volume of triethylene glycol di(2-ethyl hexanoate) plasticizer and determination of relative equilibrium concentration using a gravimetric method. [K_{d} = pphr (PU)/ pphr (PVB)] Empirical confirmation of model was conducted by hand assembling of the PU/PVB/PU composites, allowing equilibrium to take place, and then conducting plasticizer analysis of individual layers (via extraction method). The model was shown to be quite accurate and compositional equilibrium was found to occur quite rapidly and did not require autoclave lamination to effect changes.

**Table II**

| Ex. # | PU Thick mm | PVB Thick. mm | pphr PVB | pphr PVB | Tg, °C | RI_{PVB} (fmal) | pphr PU | RI_{PU} | ΔRI RI_{PVB}- RI_{PU} |
|---|---|---|---|---|---|---|---|---|---|
| | (inch) | (inch) | (initial) | (final) | (PVB) | | (final) | (final) | |
| | AG8451 | | | | | | | | |
| 7 | .025 | 0.71 | 38 | 35.0 | 33.1 | 1.481 | 30.8 | 1.484 | -.003 |
| | (.001) | (.028) | | | | | | | |
| 8 | 0.10 | 0.56 | 38 | 26.4 | 40.0 | 1.483 | 23.2 | 1.487 | -.004 |
| | (.004) | (.022) | | | | | | | |
| | AG5050 | | | | | | | | |
| 9 | 0.025 | 0.71 | 38 | 33.5 | 34.3 | 1.481 | 45.9 | 1.474 | +.007 |
| | (.001) | (.028) | | | | | | | |
| 10 | 0.10 | 0.56 | 38 | 22.5 | 43.1 | 1.484 | 30.9 | 1.480 | +.004 |
| | (.004) | (.022) | | | | | | | |

| | | | | | | | | | |
|---|---|---|---|---|---|---|---|---|---|
| Notes: 1. A PU/PVB/PU composite structure was used for all examples. Specified PU thickness is for each PU layer in the composite. 2. Partition coefficient = K_{d} = Phr(PU)/ Phr (PVB) AG5050 = 1.37; AG8451 = 0.88 3. Initial refractive index (RI) ofPU (unplasticized) and PVB (38 pphr) components are as follows: AG8451: 1.496 AG5050: 1.492 PVB (38 phr): 1.480 4. AG5050 PU is aliphatic isocyanate polyether based polyurethane film available from Thermedics Inc. of Woburn, MA. for use with laminated glass. Contains functional chemistry to provide for high adhesion to glass. 5. Tg of PVB (38 pphr) before combination ∼31°C. | | | | | | | | | |

## Claims

1. A glass laminate comprising:
a first layer comprising a plasticized polyvinyl butyral and having a top surface and a bottom surface;
a first polyurethane layer adjacent said top surface of said first layer;
a second polyurethane layer adjacent said bottom surface of said first layer;
a first glass layer adjacent said second polyurethane layer; and
a second glass layer adjacent said first polyurethane layer;
wherein one of said first polyurethane layer and said second polyurethane layer has a thickness of less than 0.125 millimeters (5 mils).

2. The glass laminate of Claim 1, wherein both of said first polyurethane layer and said second polyurethane layer have a thickness of less than 0.125 millimeters (5 mils).

3. The glass laminate of Claim 1, wherein said polyurethane is plasticized by migration of plasticizer from the first layer after the layers are combined.

4. The glass laminate of Claim 1, consisting essentially of:
a first layer comprising a plasticized polyvinyl butyral and having a top surface and a bottom surface;
a first polyurethane layer adjacent said top surface of said first layer;
a second polyurethane layer adjacent said bottom surface of said first layer,
a first glass layer adjacent said second polyurethane layer; and
a second glass layer adjacent said first polyurethane layer;
wherein one of said first polyurethane layer and said second polyurethane layer has a thickness of less than 0.125 millimeters (5 mils).

5. The glass laminate of Claim 4, wherein both of said first polyurethane layer and said second polyurethane layer have a thickness of less than 0.125 millimeters (5 mils).

6. The glass laminate of Claim 4, wherein one of said first polyurethane layer and said second polyurethane layer comprises an aliphatic isocyanate-polyether urethane.

7. The glass laminate of Claim 4, wherein one of said first polyurethane layer and said second polyurethane layer comprises an aliphatic isocyanate-polyester urethane.

8. The glass laminate of Claim 4, wherein both of said first polyurethane layer and said second polyurethane layer comprise an aliphatic isocyanate-polyester urethane.

9. The glass laminate of Claim 4, wherein both of said first polyurethane layer and said second polyurethane layer comprise an aliphatic isocyanate-polyether urethane.

## Patentansprüche

1. Glaslaminat, umfassend:
eine erste Schicht, umfassend ein plastifiziertes Polyvinylbutyral, mit einer Oberseite und einer Unterseite;
eine zur ersten Schicht benachbarte erste Polyurethanschicht;
eine zur Unterseite der ersten Schicht benachbarte zweite Polyurethanschicht;
eine zur zweiten Polyurethanschicht benachbarte erste Glasschicht; und
eine zur ersten Polyurethanschicht benachbarte zweite Glasschicht;
wobei eine aus der ersten Polyurethanschicht und der zweiten Polyurethanschicht eine Dicke von weniger als 0,125 Millimeter (5 mil) aufweist.

2. Glaslaminat gemäß Anspruch 1, wobei beide, die erste Polyurethanschicht und die zweite Polyurethanschicht, eine Dicke von weniger als 0,125 Millimeter (5 mil) aufweisen.

3. Glaslaminat gemäß Anspruch 1, wobei das Polyurethan plastifiziert wird durch Migration des Plastifizierungsmittels aus der ersten Schicht, nachdem die Schichten vereinigt wurden.

4. Glaslaminat gemäß Anspruch 1, im Wesentlichen bestehend aus:
einer ersten Schicht, umfassend ein plastifiziertes Polyvinylbutyral, mit einer Oberseite und einer Unterseite;
einer zur ersten Schicht benachbarten ersten Polyurethanschicht;
einer zur Unterseite der ersten Schicht benachbarten zweiten Polyurethanschicht;
einer zur zweiten Polyurethanschicht benachbarten ersten Glasschicht; und
einer zur ersten Polyurethanschicht benachbarten zweiten Glasschicht;
wobei eine aus der ersten Polyurethanschicht und der zweiten Polyurethanschicht eine Dicke von weniger als 0,125 Millimeter (5 mil) aufweist.

5. Glaslaminat gemäß Anspruch 4, wobei beide, die erste Polyurethanschicht und die zweite Polyurethanschicht, eine Dicke von weniger als 0,125 Millimeter (5 mil) aufweisen.

6. Glaslaminat gemäß Anspruch 4, wobei eine aus der ersten Polyurethanschicht und der zweiten Polyurethanschicht ein aliphatisches Isocyanat-Polyetherurethan umfasst.

7. Glaslaminat gemäß Anspruch 4, wobei eine aus der ersten Polyurethanschicht und der zweiten Polyurethanschicht ein aliphatisches Isocyanat-Polyesterurethan umfasst.

8. Glaslaminat gemäß Anspruch 4, wobei beide, die erste Polyurethanschicht und die zweite Polyurethanschicht, ein aliphatisches Isocyanat-Polyesterurethan umfassen.

9. Glaslaminat gemäß Anspruch 4, wobei beide, die erste Polyurethanschicht und die zweite Polyurethanschicht, ein aliphatisches Isocyanat-Polyetherurethan umfassen.

## Revendications

1. Verre stratifié comprenant :
une première couche comprenant un polybutyral de vinyle plastifié et ayant une surface supérieure et une surface inférieure ;
une première couche de polyuréthane adjacente à ladite surface supérieure de ladite première couche ;
une seconde couche de polyuréthane adjacente à ladite surface inférieure de ladite première couche ;
une première couche de verre adjacente à ladite seconde couche de polyuréthane ; et
une seconde couche de verre adjacente à ladite première couche de polyuréthane ;
dans lequel une de ladite première couche de polyuréthane et de ladite seconde couche de polyuréthane a une épaisseur inférieure à 0,125 millimètres (5 mils).

2. Verre stratifié selon la revendication 1, dans lequel à la fois ladite première couche de polyuréthane et ladite seconde couche de polyuréthane ont une épaisseur inférieure à 0,125 millimètres (5 mils).

3. Verre stratifié selon la revendication 1, dans lequel ledit polyuréthane est plastifié par migration de plastifiant à partir de la première couche une fois que les couches sont combinées.

4. Verre stratifié selon la revendication 1, consistant essentiellement en :
une première couche comprenant un polybutyral de vinyle plastifié et ayant une surface supérieure et une surface inférieure ;
une première couche de polyuréthane adjacente à ladite surface supérieure de ladite première couche ;
une seconde couche de polyuréthane adjacente à ladite surface inférieure de ladite première couche ;
une première couche de verre adjacente à ladite seconde couche de polyuréthane ; et
une seconde couche de verre adjacente à ladite première couche de polyuréthane ;
dans lequel une de ladite première couche de polyuréthane et de ladite seconde couche de polyuréthane a une épaisseur inférieure à 0,125 millimètres (5 mils).

5. Verre stratifié selon la revendication 4, dans lequel à la fois ladite première couche de polyuréthane et ladite seconde couche de polyuréthane ont une épaisseur inférieure à 0,125 millimètres (5 mils).

6. Verre stratifié selon la revendication 4, dans lequel une de ladite première couche de polyuréthane et de ladite seconde couche de polyuréthane comprend un polyétheruréthane d'isocyanate aliphatique.

7. Verre stratifié selon la revendication 4, dans lequel une de ladite première couche de polyuréthane et de ladite seconde couche de polyuréthane comprend un polyesteruréthane d'isocyanate aliphatique.

8. Verre stratifié selon la revendication 4, dans lequel à la fois ladite première couche de polyuréthane et ladite seconde couche de polyuréthane comprennent un polyesteruréthane d'isocyanate aliphatique.

9. Verre stratifié selon la revendication 4, dans lequel à la fois ladite première couche de polyuréthane et ladite seconde couche de polyuréthane comprennent un polyétheruréthane d'isocyanate aliphatique.
